(19) **Europäisches Patentamt European Patent Office Office européen des brevets**

(11) **EP 4 704 328 A1**

(12) **EUROPEAN PATENT APPLICATION**

(43) Date of publication:
04.03.2026 Bulletin 2026/10

(21) Application number: 24197834.5

(22) Date of filing: 02.09.2024

(51) International Patent Classification (IPC):
$H02P\ 9/48^{(2006.01)}$      $H02M\ 1/12^{(2006.01)}$
$H02P\ 21/05^{(2006.01)}$      $H02P\ 29/50^{(2016.01)}$

(52) Cooperative Patent Classification (CPC):
H02P 9/48; H02M 1/12; H02P 21/05; H02P 29/50

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(71) Applicant: ABB Schweiz AG
5400 Baden (CH)

(72) Inventors:
• HEIKKILA, Joni
00380 Helsinki (FI)
• PULLI, Tuomas
00380 Helsinki (FI)
• PIRSTO, Ville
00380 Helsinki (FI)

(74) Representative: Sykora & König Patentanwälte
PartG mbB
Maximilianstraße 2
80539 München (DE)

(54) **METHOD, CONTROLLER AND COMPUTER PROGRAM FOR OPERATING AN INVERTER, AND INVERTER SYSTEM**

(57) A method for operating an inverter (20) for driving a generator (22) is described. The inverter (20) comprises a DC-link (24) having a DC-link capacitor (26) and the inverter (20) being configured for converting a three-phase AC voltage ($U_u$, $U_v$, $U_w$) generated by the generator (22) into a DC-link voltage to be applied to the DC-link capacitor (26). The method comprises: receiving a power reference value ($P_{REF}$) which is representative of a power to be provided by the generator (22); determining an estimated mechanical frequency ($\Omega_{EST}$) of the generator (22); determining a harmonic component ($\Omega_{H,EST}$) of the estimated mechanical frequency ($\Omega_{EST}$); determining a torque reference value ($T_{REF}$) depending on the power reference value ($P_{REF}$) and the determined harmonic component, wherein the torque reference ($T_{REF}$) is representative of a torque to be generated by the generator (22); generating a switching signal (SWS) for the inverter (20) depending on the determined torque reference value ($T_{REF}$); and operating the inverter (20) by supplying the switching signal (SWS) to the inverter (20).

**FIG. 3**

**Description**

FIELD OF THE INVENTION

The invention relates to the field of electrical inverters. In particular, the invention relates to a method, a controller, and a computer program for operating an inverter for driving a generator, and to an inverter system comprising the controller. Further, the invention relates to a computer-readable medium on which the computer program is stored.

BACKGROUND OF THE INVENTION

Applications where the DC-link voltage is controlled by an inverter driven generator are becoming more common. An inverter for driving a generator typically comprises a DC-link having a DC-link capacitor, a DC terminal for being connected to a DC device or a DC grid, an AC terminal coupled to the generator, and a set of semiconductor switches for converting a three-phase AC voltage generated by the generator into a DC-link voltage applied to the DC-link capacitor. One prominent exemplary application in this context is an inverter driven generator for supplying energy to a DC grid of a ship or to an electric vehicle, such as a train, e.g. a tram or subway, or for converting electric energy generated by a wind turbine. In some applications, such as shaft generators in ships, for example, the shaft speed may be controlled by a diesel engine. The diesel engine may introduce large torque ripple and consequent a large speed ripple that cannot be suppressed. For example, a 7-cylinder 2-stroke diesel engine may introduce a large seventh harmonic frequency component to the speed. A large harmonic frequency component in the speed then may result in a harmonic frequency component in the DC link voltage. This may reduce the lifetime of batteries and/or capacitors connected to the DC link, and thereby of the inverter.
A conventional approach for calculating a torque reference may be:

$$T_{REF} = \frac{P_{REF}}{\Omega_{EST}} \qquad (1)$$

where $P_{REF}$ is a power reference value and $\Omega_{EST}$ is an estimated mechanical frequency of the generator. The power reference value $P_{REF}$ is typically an output of a PI controller controlling the DC link voltage. This approach works quite well when the mechanical frequency and consequently the torque are constant in steady state. However, when a strong harmonic component exists in the mechanical frequency and consequently in the torque, as explained above in context with the 7-cylinder 2-stroke diesel engine, this approach may result in a harmonic frequency component in the power and consequently in the DC link voltage. There are two main reasons for this. Firstly, the estimated mechanical frequency is typically low pass filtered which causes a phase shift between the estimated mechanical frequency and the actual mechanical frequency. Secondly, maintaining the harmonic frequency component in the torque also requires power due to the motor inductance. Another approach for calculating the torque reference that considers these two effects is therefore needed to avoid the above-mentioned reduction of the lifetime of inverter.

DESCRIPTION OF THE INVENTION

It is an objective of the present invention to provide a method, a controller, and a computer program for operating an inverter for driving a generator, which contribute to a long lifetime of the inverter. It is another objective of the present invention to provide an inverter system comprising the controller and the inverter. It is another objective of the present invention to provide a computer-readable medium on which the computer program is stored.
These objectives are achieved by the subject-matter of the independent claims. Further exemplary embodiments are evident from the dependent claims and the following description.
A first aspect relates to a method for operating an inverter for driving a generator. The inverter comprises a DC-link having a DC-link capacitor and the inverter being configured for converting a three-phase AC voltage generated by the generator into a DC-link voltage to be applied to the DC-link capacitor. The method comprises: receiving a power reference value which is representative of a power to be provided by the generator; determining an estimated mechanical frequency of the generator; determining a harmonic frequency component of the estimated mechanical frequency; determining a torque reference value depending on the power reference value and the determined harmonic frequency component, wherein the torque reference is representative of a torque to be generated by the generator; generating a switching signal for the inverter depending on the determined torque reference value; and operating the inverter by supplying the switching signal to the inverter. The power to be provided by the generator may be an electrical power output by the generator.
A second aspect relates to a main controller for operating the inverter for driving the generator. The main controller comprises: a memory for storing one or more estimated and/or determined values; and a processor communicatively coupled to the memory and being configured to carry out the method as described above and in the following.

A third aspect relates to an inverter system. The inverter system comprises the inverter for driving the generator and the main controller for operating the inverter.

A fourth aspect relates to a computer program for operating the inverter for driving the generator. The computer program comprises computer-readable instructions which, when being executed by the processor of the controller, carry out the method as described above an in the following.

A fifth aspect relates to a computer-readable medium on which the computer program is stored. The computer-readable medium may be a floppy disk, a hard disk, an USB (Universal Serial Bus) storage device, a RAM (Random Access Memory), a ROM (Read Only Memory), an EPROM (Erasable Programmable Read Only Memory) or a FLASH memory. The computer readable medium may also be a data communication network, e.g. the Internet, which allows downloading a program code. In general, the computer-readable medium may be a non-transitory or transitory medium.

It has to be understood that some features of the present invention are described with respect to one of the aspects only for conciseness reasons and to avoid unnecessary repetitions, but that these features may be easily transferred to one or more of the other aspects by the person skilled in the art.

The method may be carried out by the main controller for controlling the inverter. The power reference value may be predetermined and/or may be sent to the main controller by an external device. The external device may be external with respect to the main controller and/or with respect to the inverter. The estimated mechanical frequency may be determined from the three-phase AC voltage and the corresponding three-phase output current of the inverter, e.g. by a flux observer, or it may be measured, e.g. by an encoder. In this case, the "measured" mechanical frequency may correspond to the "estimated" mechanical frequency, because the encoder does not measure the mechanical frequency directly, but counts teeth or magnetic pads on an encoder wheel of the encoder and estimates the mechanical frequency based on the counted number of teeth or, respectively, magnetic pads.

The inverter may comprise two or more, e.g., six, semiconductor switches for converting the AC-voltage into the DC-link voltage. The switching signal may comprise switching commands for the semiconductor switches. When generating the switching signal, timing limitations of the semiconductor switches, such as an interlocking time and/or a minimal on/off time of the semiconductor switches, may be considered. The switching signal, in particular the switching commands, then may be translated into gate voltages for controlling the semiconductor switches, as it is known in the art. The inverter may be a two-level voltage source inverter or a three-level voltage source inverter, for example.

According to an embodiment, the method comprises: determining a harmonic compensation component from the harmonic frequency component of the estimated mechanical frequency, wherein the torque reference value is determined depending on the determined harmonic frequency component of the estimated mechanical frequency by determining the torque reference value from the harmonic compensation component. This may contribute to determine the torque reference value very accurately.

According to an embodiment, the harmonic compensation component is determined from the harmonic frequency component of the estimated mechanical frequency by a transfer function which depends on at least one time constant. This may contribute to a high accuracy of the method described above.

According to an embodiment, the transfer function depends on another time constant, the other time constant is determined depending on the power reference value. In addition, the other time constant may be determined depending on a magnitude of a permanent magnet flux of the generator, and/or on a constant or relatively slowly changing component $\omega_0$ of the mechanical frequency. This may contribute to determine the torque reference value very accurately. The other time constant may be referred to as third time constant.

According to an embodiment, the method comprises: determining a mechanical frequency output from the harmonic compensation component, wherein the torque reference value is determined from the harmonic compensation component by determining the torque reference value from the mechanical frequency output. This may contribute to determine the torque reference value in an easy way.

According to an embodiment, the mechanical frequency output is determined from the harmonic compensation component by adding the harmonic compensation component to the estimated mechanical frequency, wherein the mechanical frequency output corresponds to the sum of the harmonic compensation component and the estimated mechanical frequency. This may contribute to determine the torque reference value in an easy way.

According to an embodiment, the torque reference value is determined from the mechanical frequency output by dividing the power reference value through the mechanical frequency output, wherein the resulting quotient corresponds to the torque reference value. This may contribute to determine the torque reference value in an easy way.

According to an embodiment, the harmonic frequency component of the estimated mechanical frequency is determined from the estimated mechanical frequency by a band-pass filter. This may contribute to determine the torque reference value in an easy way. The band-pass filter may be a second order band-pass filter, for example. A transfer function corresponding to the band-pass filter may be referred to as first transfer function.

These and other aspects of the invention will be apparent from and elucidated with reference to the embodiments described hereinafter.

BRIEF DESCRIPTION OF THE DRAWINGS

The subject matter of the invention will be explained in more detail in the following text with reference to exemplary embodiments which are illustrated in the attached drawings.

Fig. 1 shows an example of an inverter for driving a generator;
Fig. 2 shows an exemplary embodiment of a main controller for operating an inverter.
Fig. 3 shows an exemplary embodiment of a current reference generation block of the main controller of figure 2.

The reference symbols used in the drawings, and their meanings, are listed in summary form in the list of reference symbols. In principle, identical parts are provided with the same reference symbols in the figures.

DETAILED DESCRIPTION OF EXEMPLARY EMBODIMENTS

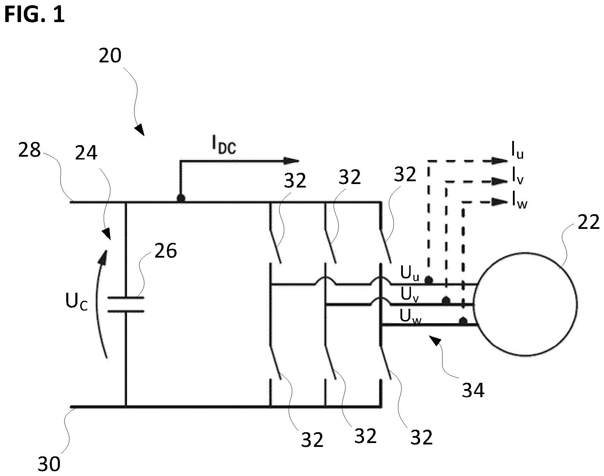

**Fig. 1** shows an inverter 20, in particular an electrical inverter. The inverter 20 is electrically coupled to a generator 22. The inverter 20 is configured for driving the generator 22. The generator 22 is configured for generating a three-phase AC voltage. The inverter 20 is configured for converting the three-phase AC voltage into a DC voltage. The inverter 20 may be coupled to an external device (not shown) for applying the DC voltage to the external device. As such, the inverter 20 may act as a power source for the external device. The external device may be an electrical DC device or an electrical grid of a ship (not shown), for example. The DC device may be external with respect to the inverter 20. The DC device may be a rechargeable battery. The inverter 20 and the generator 22 may be arranged in a ship. In this case, the DC grid may be a DC grid of the ship. Alternatively, the inverter 20 and the generator 22 may be arranged in an electric vehicle, such as a train or subway, e.g., for supplying electric energy to an onboard grid of the corresponding electric vehicle. Alternatively, the generator 22 may be a wind turbine.

The inverter 20 comprises a DC-link 24 having a DC-link capacitor 26, a first DC-terminal 28, a second DC-terminal 30, a set of semiconductor switches 32, e.g. six semiconductor switches 32, and an AC-terminal 34. The inverter 20 is a two-level voltage source inverter. However, in an alternative embodiment, a three-level voltage source inverter may be used, for example.

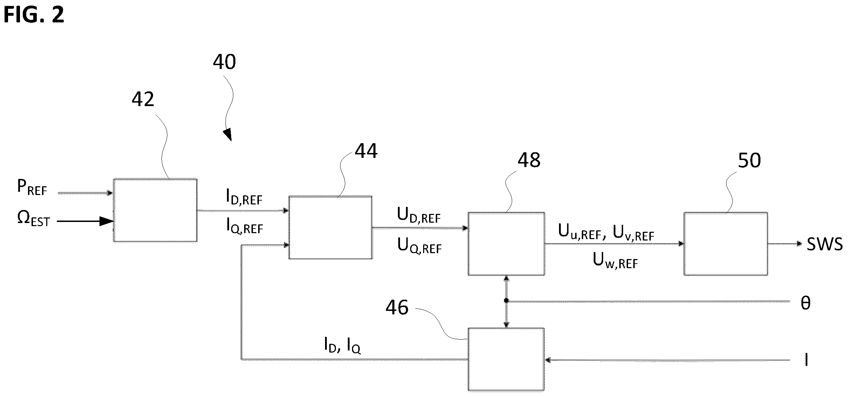

The AC-terminal 34 is coupled to the generator 22. The AC-terminal 34 is configured for receiving the three-phase AC voltage generated by the generator 22. The semiconductor switches 32 are configured for converting the three-phase AC voltage into the DC voltage, in particular a DC-link voltage Uc, applied to the DC-link capacitor 26. To this end, the semiconductor switches 32, in particular gates of the semiconductor switches 32, are coupled to a main controller 40 (see figure 2) for controlling the inverter 20.

The three-phase AC voltage consists of a phase u voltage $U_u$, a phase v voltage $U_v$, and a phase w voltage $U_w$ applied to the AC-terminal 34 by the generator 22. As a result, the generator 22 feeds a three-phase current into the AC-terminal 34. The three-phase current consists of a phase u current $I_u$, a phase v current $I_v$, and a phase w current $I_w$.

The three-phase AC voltage is converted by the semiconductor switches 32 into the DC-link voltage Uc resulting over the DC-link capacitor 26. This enables to feed a corresponding DC current $I_{DC}$ to the external device.

The DC-terminals 28, 30 are configured for being connected to the external DC device or to the DC grid. The first DC-terminal 28 may be coupled to a positive potential of the DC device and the second DC-terminal 30 may be coupled to a negative potential of the DC device.

The inverter 20 may comprise one or more components to measure a current space vector, e.g., depending on the phase u current $I_u$, the phase v current $I_v$, and the phase w current $I_w$ or by using actual states of the switches 32 and the DC-link current $I_{DC}$. These component(s) may be one or more current sensors (not shown).

**Fig. 2** shows an exemplary embodiment of the main controller 40 for operating an inverter, e.g., the inverter 20 of figure 1. The main controller 40 may comprise a current reference generation block 42, a current controller 44, a first transformation block 46, a second transformation block 48, and a modulator 50. In addition, the main controller 40 comprises a memory (not shown) for storing one or more measured, determined, and/or predetermined current and/or reference values, and a processor (not shown) communicatively coupled to the memory and being configured to carry out a method for operating the inverter 20, as described in the following.

A power reference value $P_{REF}$ to be generated by the inverter 20 may be received by the main controller 40, in particular by the current reference generation block 42. The power reference value $P_{REF}$ may be predetermined and/or may be generated by the external device. The external device may be external with respect to the main controller 40.

In addition, an estimated mechanical frequency $\Omega_{EST}$ is determined, e.g., by the main controller 40 or by an encoder. In case of the main controller 40 determining the estimated mechanical frequency $\Omega_{EST}$, it may be determined from the three-phase AC voltage and the corresponding three-phase output current of the inverter 20, e.g. by a flux observer (not shown) as it is known in the art. In case of the encoder determining the estimated mechanical frequency $\Omega_{EST}$, the estimated mechanical frequency $\Omega_{EST}$ may be estimated by the encoder and may be determined by the main controller 40 by reading it from the encoder or from the memory.

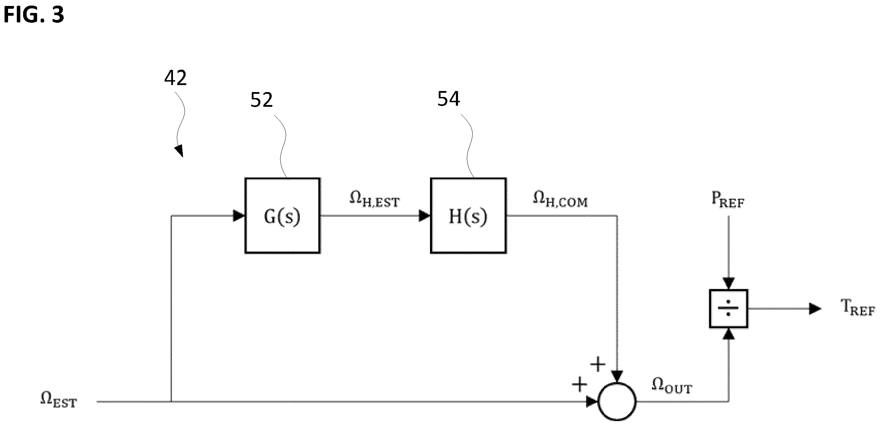

A stator current reference $I_{D,REF}$, $I_{Q,REF}$ corresponding to a stator current to be generated by the generator 22 may be determined depending on the received power reference $P_{REF}$ and on the estimated mechanical frequency $\Omega_{EST}$, in particular by the current reference generation block 42. When determining the stator current reference $I_{D,REF}$, $I_{Q,REF}$, a d-axis stator current reference $I_{D,REF}$ and a q-axis stator current reference $I_{Q,REF}$ may be determined. The determination of the stator current references $I_{D,REF}$, $I_{Q,REF}$ is explained in more detail with respect to figure 3 below.

An actual stator current I generated by the generator 22 may be received by the main controller 40, in particular by the current controller 44. The actual stator current I may be measured by a current sensor (not shown) or may be estimated by the main controller 40. The current sensor may be a component of the generator 22. An actual d-axis stator current component $I_D$ and an actual q-axis current component $I_Q$ may be determined from the actual stator current I. The actual d-axis stator current component $I_D$ and the actual q-axis stator current component $I_Q$ may be determined from the actual stator current I by a space vector transformation, for example being carried out by the first transformation block 46. In general, a space vector transformation may be used to transform signals from three-phase signals into space vector rotating in synchronous coordinates by utilizing Park and Clarke transformations. Then, a stator voltage reference $U_{D,REF}$, $U_{Q,REF}$ corresponding to the three-phase AC voltage $U_u$, $U_v$, $U_w$ to be applied to the generator 22 may be determined depending on the actual d-axis stator current component $I_D$, the actual q-axis current component $I_Q$, and on the stator current references $I_{D,REF}$, $I_{Q,REF}$, e.g. by the current controller 44.

The stator voltage reference $U_{D,REF}$, $U_{Q,REF}$ may comprise two stator voltage reference components, e.g., a d-axis voltage reference component $U_{D,REF}$ and a q-axis voltage reference component $U_{Q,REF}$. The d-axis voltage reference component $U_{D,REF}$ and the q-axis voltage reference component $U_{Q,REF}$ in the dq-frame may be transferred into three voltage reference components in the uvw-frame, i.e., an u-phase voltage reference component $U_{u,REF}$, a v-phase voltage reference component $U_{v,REF}$ and a w-phase voltage reference component $U_{w,REF}$, e.g., by an inverse space vector transformation which may be carried out by the second transformation block 48. When transferring the stator voltage references $U_{D,REF}$, $U_{Q,REF}$ in the dq-frame into the three-phase voltage reference components $U_{u,REF}$, $U_{v,REF}$, $U_{w,REF}$ in the uvw-frame, an actual angle $\theta$ of the rotor may be considered, in particular within the first and/or second transformation block 46, 48. The actual angle $\theta$ may be measured by an appropriate sensor, e.g., a hall-sensor, or may be estimated, e.g., by the main controller 40.

Then, a switching signal SWS for the inverter 40 may be generated depending on the three voltage reference components $U_{u,REF}$, $U_{v,REF}$, $U_{w,REF}$ in the uvw-frame. The switching signal SWS may comprise switching commands for the semiconductor switches 32. When generating the switching signal SWS, timing limitations of the semiconductor switches 32, such as an interlocking time and/or a minimal on/off time of the semiconductor switches 32, may be considered. The switching signal SWS, in particular the switching commands, then may be translated into gate voltages for controlling the semiconductor switches 32, as it is known in the art. So, the modulator 50 translates the voltage reference components $U_{u,REF}$, $U_{v,REF}$, $U_{w,REF}$ into gate driver signals in a semiconductor bridge comprising the semiconductor switches 32, which will then realize the corresponding three-phase AC voltage on average over a switching cycle of the inverter 20.

Finally, the inverter 20 may be operated by the main controller 40 by supplying the switching signal SWS to the inverter 20, in particular to the gates of the semiconductor switches 32.

**Fig. 3** shows an exemplary embodiment of the current reference generation block 42 of the main controller 40 of figure 2. The current reference generation block 42 may have a band-pass filter 52 having a first transfer function G(s), and a block 54 having a second transfer function H(s). The band-pass filter 52 may be a second order band-pass filter, for example.

The current reference generation block 42 may receive the power reference value $P_{REF}$ which is representative of a power to be provided by the generator 22. The power reference value $P_{REF}$ may be predetermined and/or may be sent to the main controller 42 by the external device.

The current reference generation block 42 may receive the estimated mechanical frequency $\Omega_{EST}$ of the generator 22. The estimated mechanical frequency $\Omega_{EST}$ is representative of a speed of rotation of the generator 22.

A harmonic frequency component $\Omega_{H,EST}$ of the estimated mechanical frequency $\Omega_{EST}$ may be determined, e.g., by the band-pass filter 52. In particular, the harmonic frequency component $\Omega_{H,EST}$ may be determined from the estimated mechanical frequency $\Omega_{EST}$ by a first transfer function G(s).

A harmonic compensation component $\Omega_{H,COM}$ may be determined from the harmonic frequency component $\Omega_{H,EST}$ of the estimated mechanical frequency $\Omega_{EST}$. In particular, the harmonic compensation component $\Omega_{H,COM}$ may be determined from the harmonic frequency component $\Omega_{H,EST}$ by a second transfer function H(s). The transfer function H(s) may depend on the time constants $T_1$, $T_2$. The transfer function H(s) may depend on another time constant, wherein the other time constant may be determined depending on the power reference value $P_{REF}$, as explained below. In addition, the other time constant may be determined depending on a magnitude of a permanent magnet flux $\Psi$ of the generator 22, and/or on a constant or relatively slowly changing component $\omega_0$ of the mechanical frequency. The other time constant may be referred to as third time constant $T_3$.

Then, a mechanical frequency output $\Omega_{OUT}$ may be determined from the harmonic compensation component $\Omega_{H,COM}$. For example, the mechanical frequency output $\Omega_{OUT}$ may be determined from the harmonic compensation component $\Omega_{H,COM}$ by adding the harmonic compensation component $\Omega_{H,COM}$ to the estimated mechanical frequency $\Omega_{EST}$. The mechanical frequency output $\Omega_{OUT}$ may correspond to the sum of the harmonic compensation component $\Omega_{H,COM}$ and the estimated mechanical frequency $\Omega_{EST}$.

The torque reference value $T_{REF}$ may be determined from the harmonic compensation component $\Omega_{H,COM}$ by determining the torque reference value $T_{REF}$ from the mechanical frequency output $\Omega_{OUT}$. For example, the torque reference value $T_{REF}$ may be determined from the mechanical frequency output $\Omega_{OUT}$ by dividing the power reference value $P_{REF}$ through the mechanical frequency output $\Omega_{OUT}$, wherein the resulting quotient corresponds to the torque reference value $T_{REF}$. Then, the current reference generation block 42 may determine the stator current references $I_{D,REF}$, $I_{Q,REF}$ depending on the torque reference value $T_{REF}$, e.g., by formulas 7 and/or 8 described below, and may output the stator current references $I_{D,REF}$, $I_{Q,REF}$, as shown in figure 2.

The theoretical background for determining the torque reference value $T_{REF}$, in particular the above-mentioned transfer functions and thereby for determining the harmonic compensation component $\Omega_{H,COM}$ is given in the following: Assuming that the power $P_{INV}$ received by the inverter 20 is the power of a non-salient permanent magnet machine

$$P_{INV} = U_D I_D + U_Q I_Q \qquad (2)$$

where $U_D$ and $U_Q$ are the stator voltage components and $I_D$ and $I_Q$ are the actual stator current components in the synchronous reference frame, i.e., the dq-frame. The stator voltage components are

$$U_D = R I_D - \Omega_{ACT} L I_Q + L \frac{dI_D}{dt} \qquad (3)$$

$$U_Q = R I_Q + \Omega_{ACT} L I_D + L \frac{dI_Q}{dt} + \Omega_{ACT} \Psi \qquad (4)$$

where R and L are the stator resistance and inductance respectively, $\Omega_{ACT}$ is the actual mechanical frequency and $\Psi$ is the magnitude of the permanent magnet flux. By substituting equation 3 and equation 4 into equation 2 and by simplifying the resulting equation, an exact relation between the power $P_{INV}$ of the inverter 20 and the stator current components $I_D$, $I_Q$ may be found

$$P_{INV} = R I_D^2 + \frac{L}{2} \frac{dI_D^2}{dt} + R I_Q^2 + \frac{L}{2} \frac{dI_Q^2}{dt} + \Omega_{ACT} \Psi I_Q \qquad (5)$$

Assuming that resistive losses are insignificant, an approximate relation between the power $P_{INV}$ of the inverter 20 and the stator current components $I_D$, $I_Q$ may be found

$$P_{INV} = \frac{L}{2} \frac{dI_D^2}{dt} + \frac{L}{2} \frac{dI_Q^2}{dt} + \Omega_{ACT} \Psi I_Q \qquad (6)$$

Assuming that the inverter 20 controls the stator current components $I_D$, $I_Q$, the stator current references $I_{D,REF}$, $I_{Q,REF}$ for the stator current components $I_D$, $I_Q$ are

$$I_{D,REF} = 0 \qquad (7)$$

$$I_{Q,REF} = \frac{T_{REF}}{\Psi} \qquad (8)$$

$$T_{REF} = \frac{P_{REF}}{\Omega_{OUT}} \qquad (9)$$

$$\Omega_{OUT} = \Omega_{EST} + \Omega_{H,COM} \tag{10}$$

where $\Omega_{OUT}$ is the mechanical frequency output corresponding to the sum of the estimated mechanical frequency $\Omega_{EST}$ and the harmonic compensation component $\Omega_{H,COM}$. Setting the d-axis stator current component $I_{D,REF}$ to zero corresponds to traditional MTPA (Maximum Torque Per Ampere) principle. In practice, the d-axis stator current reference $I_{D,REF}$ may need to be adjusted if a maximum output voltage of the inverter 20 is reached. However, for this analysis the d-axis stator current component $I_{D,REF}$ is assumed to be constant. The power reference $P_{REF}$ is also assumed to be constant in steady state.

For this analysis it may be reasonable to assume that the stator current components $I_D$, $I_Q$ follow their corresponding references according to equations 7, 8 and 9

$$I_D = I_{D,REF} = 0 \tag{11}$$

$$I_Q = I_{Q,REF} = \frac{P_{REF}}{\Omega_{OUT}\Psi} \tag{12}$$

$$\frac{L}{2}\frac{dI_D^2}{dt} = 0 \tag{13}$$

$$\frac{L}{2}\frac{dI_Q^2}{dt} = \frac{L}{2}\frac{d\left(\frac{P_{REF}}{\Omega_{OUT}\Psi}\right)^2}{dt} = -L\frac{P_{REF}^2}{\Omega_{OUT}^3\Psi^2}\frac{d\Omega_{OUT}}{dt} \tag{14}$$

By substituting equations 12, 13 and 14 into equation 6 and by modifying, a ratio between the power $P_{INV}$ of the inverter 20 and the power reference $P_{REF}$ is found

$$\frac{P_{INV}}{P_{REF}} = -L\frac{P_{REF}}{\Omega_{OUT}^3\Psi^2}\frac{d\Omega_{OUT}}{dt} + \frac{\Omega_{ACT}}{\Omega_{OUT}} \tag{15}$$

Assuming that the mechanical frequency consists of a constant or relatively slowly changing component $\omega_0$ and a time-dependent actual harmonic frequency component $\Omega_{H,ACT}$

$$\Omega_{ACT} = \omega_0 + \Omega_{H,ACT} \tag{16}$$

Equivalently the estimated mechanical frequency $\Omega_{EST}$ consists of the same constant or relatively slowly changing component $\omega_0$ and a time-dependent harmonic component $\Omega_{H,EST}$

$$\Omega_{EST} = \omega_0 + \Omega_{H,EST} \tag{17}$$

By substituting equations 10, 16 and 17 into equation 15 a ratio between the power $P_{INV}$ of the inverter 20 and the power reference $P_{REF}$ is found

$$\frac{P_{INV}}{P_{REF}} = -L\frac{P_{REF}}{\left(\omega_0 + \Omega_{H,EST} + \Omega_{H,COM}\right)^3\Psi^2}\left(\frac{d\Omega_{H,EST}}{dt} + \frac{d\Omega_{H,COM}}{dt}\right) + \frac{\omega_0 + \Omega_{H,ACT}}{\omega_0 + \Omega_{H,EST} + \Omega_{H,COM}} \tag{18}$$

Ideally, the ratio between the power $P_{INV}$ of the inverter 20 and the power reference $P_{REF}$ may be one resulting in equation

$$\Omega_{H,EST} + \Omega_{H,COM} = -L\frac{P_{REF}}{(\omega_0 + \Omega_{H,EST} + \Omega_{H,COM})^2 \Psi^2}\left(\frac{d\Omega_{H,EST}}{dt} + \frac{d\Omega_{H,COM}}{dt}\right) + \Omega_{H,ACT} \quad (19)$$

To come up with a reasonable equation for the required harmonic compensation component an approximation of equation 19 is considered

$$\Omega_{H,EST} + \Omega_{H,COM} = -T_3\left(\frac{d\Omega_{H,EST}}{dt} + \frac{d\Omega_{H,COM}}{dt}\right) + \Omega_{H,ACT} \quad (20)$$

where the approximate equivalent third time constant $T_3$ is

$$T_3 = L\frac{P_{REF}}{\omega_0^2 \Psi^2} \quad (21)$$

To transform an equation from the time domain to the frequency domain the well-known properties of the Laplace transform may be applied:

1. Laplace transform is linear;

2. Laplace transform of the differential operator $\frac{d}{dt}$ applied to a time domain function f(t) is

$$\frac{d}{dt}f(t) = sF(s) - f(0)$$ where s is a complex variable and F(s) is the frequency domain equivalent of the time domain function f(t).

The initial values of time domain functions of the harmonic frequency component $\Omega_{H,EST}$ and the harmonic compensation component $\Omega_{H,COM}$ at t = 0 may be assumed to be zero. Equation 20 in the frequency domain is then

$$\Omega_{H,EST} + \Omega_{H,COM} = -T_3\left(s\Omega_{H,EST} + s\Omega_{H,COM}\right) + \Omega_{H,ACT} \quad (22)$$

The harmonic compensation component $\Omega_{H,COM}$ can now be solved as

$$\Omega_{H,COM} = \frac{\Omega_{H,ACT}}{1 + sT_3} - \Omega_{H,EST} \quad (23)$$

Assuming that the estimated mechanical frequency $\Omega_{EST}$ approximately equals the actual mechanical frequency $\Omega_{ACT}$ but is passed through a filter stage with a well-known transfer function, for example a pair of first order low-pass filters with first and, respectively, second time constants $T_1$ and $T_2$

$$\frac{\Omega_{EST}}{\Omega_{ACT}} = \frac{1}{1 + sT_1}\frac{1}{1 + sT_2} \quad (24)$$

Furthermore, it is assumed that this same approximation applies also for the harmonic frequency components $\Omega_{H,EST}$ and $\Omega_{H,ACT}$

$$\frac{\Omega_{H,EST}}{\Omega_{H,ACT}} = \frac{1}{1 + sT_1}\frac{1}{1 + sT_2} \quad (25)$$

Consequently, according to equations 23 and 25, the second transfer function H(s) from the harmonic frequency component $\Omega_{H,EST}$ to the harmonic compensation component $\Omega_{H,COM}$ is

$$H(s) = \frac{\Omega_{H,COM}}{\Omega_{H,EST}} = \frac{(1 + sT_1)(1 + sT_2)}{1 + sT_3} - 1 \qquad (26)$$

The harmonic frequency component $\Omega_{H,EST}$ can be extracted from the estimated mechanical frequency $\Omega_{EST}$ by a resonator or the band-pass filter 52 with the well-known first transfer function G(s):

$$G(s) = \frac{\Omega_{H,EST}}{\Omega_{EST}} = \frac{\frac{\omega_H}{Q} s}{s^2 + \frac{\omega_H}{Q} s + \omega_H^2} \qquad (27)$$

where $\omega_H$ is the harmonic frequency to be extracted and Q is the quality factor. By substituting equations 10, 26 and 27 into equation 9 the proposed equation for torque reference value $T_{REF}$ is found

$$T_{REF} = \frac{P_{REF}}{\left(1 + G(s)H(s)\right)\Omega_{EST}} \qquad (28)$$

The fundamental frequency $\omega_0$ may be calculated as an average value of the estimated mechanical frequency $\Omega_{EST}$. The harmonic frequency $\omega_H$ may be needed for the first transfer function G(s) and may be calculated as

$$\omega_H = K_H \omega_0 \qquad (29)$$

where $K_H$ is the harmonic number.

An inverter system comprises the inverter 20 for driving the generator 22 and the main controller 40 for operating the inverter 20.

A computer program for operating the inverter 20 for driving the generator 22 may be provided. The computer program may comprise computer-readable instructions which, when being executed by the processor of the main controller 40, carry out the method as described above. The computer program may be stored on a computer-readable medium. The computer-readable medium may be a floppy disk, a hard disk, an USB (Universal Serial Bus) storage device, a RAM (Random Access Memory), a ROM (Read Only Memory), an EPROM (Erasable Programmable Read Only Memory) or a FLASH memory. The computer readable medium may also be a data communication network, e.g. the Internet, which allows downloading a program code. In general, the computer-readable medium may be a non-transitory or transitory medium.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art and practising the claimed invention, from a study of the drawings, the disclosure, and the appended claims. In the claims, the word "comprising" does not exclude other elements or steps, and the indefinite article "a" or "an" does not exclude a plurality. A single processor or controller or other unit may fulfil the functions of several items recited in the claims. The mere fact that certain measures are recited in mutually different dependent claims does not indicate that a combination of these measures cannot be used to advantage. Any reference signs in the claims should not be construed as limiting the scope.

LIST OF REFERENCE SYMBOLS

| | |
|---|---|
| inverter | 20 |
| generator | 22 |
| DC-link | 24 |
| DC-link capacitor | 26 |
| first DC-terminal | 28 |
| second DC-terminal | 30 |
| semiconductor switch | 32 |
| AC-terminal | 34 |
| main controller | 40 |
| current reference generation block | 42 |

(continued)

| | |
|---|---|
| current controller | 44 |
| first transformation block | 46 |
| second transformation block | 48 |
| modulator | 50 |
| band-pass filter | 52 |
| block | 54 |
| DC current | $I_{DC}$ |
| DC-link voltage | $U_C$ |
| phase u current | $I_u$ |
| phase v current | $I_v$ |
| phase w current | $I_w$ |
| phase a voltage | $U_u$ |
| phase b voltage | $U_v$ |
| phase c voltage | $U_w$ |
| DC-link voltage reference | $U_{C,REF}$ |
| d-axis stator voltage reference | $U_{D,REF}$ |
| d-axis stator voltage reference | $U_{Q,REF}$ |
| phase u voltage reference | $U_{u,REF}$ |
| phase v voltage reference | $U_{v,REF}$ |
| phase w voltage reference | $U_{w,REF}$ |
| d-axis stator current reference | $I_{D,REF}$ |
| q-axis stator current reference | $I_{Q,REF}$ |
| actual d-axis current component | $I_D$ |
| actual q-axis current component | $I_Q$ |
| stator angle | $\theta$ |
| actual current | I |
| rotational speed | $\omega$ |
| switching signal | SWS |
| estimated mechanical frequency | $\Omega_{EST}$ |
| torque reference value | $T_{REF}$ |
| harmonic frequency component | $\Omega_{H,EST}$ |
| power reference value | $P_{REF}$ |
| first transfer function | G(s) |
| second transfer function | H(s) |
| harmonic compensation component | $\Omega_{H,COM}$ |
| mechanical frequency output | $\Omega_{OUT}$ |

**Claims**

1. A method for operating an inverter (20) for driving a generator (22), the inverter (20) comprising a DC-link (24) having a DC-link capacitor (26) and the inverter (20) being configured for converting a three-phase AC voltage ($U_u$, $U_v$, $U_w$) generated by the generator (22) into a DC-link voltage (Uc) to be applied to the DC-link capacitor (26), the method comprising:

   receiving a power reference value ($P_{REF}$) which is representative of a power to be provided by the generator (22);
   determining an estimated mechanical frequency ($\Omega_{EST}$) of the generator (22);
   determining a harmonic frequency component ($\Omega_{H,EST}$) of the estimated mechanical frequency ($\Omega_{EST}$);
   determining a torque reference value ($T_{REF}$) depending on the power reference value ($P_{REF}$) and the determined harmonic frequency component ($\Omega_{H,EST}$), wherein the torque reference ($T_{REF}$) is representative of a torque to be generated by the generator (22);
   generating a switching signal (SWS) for the inverter (20) depending on the determined torque reference value ($T_{REF}$); and

operating the inverter (20) by supplying the switching signal (SWS) to the inverter (20).

2. The method according to claim 1, comprising:
determining a harmonic compensation component ($\Omega_{H,COM}$) from the harmonic frequency component ($\Omega_{H,EST}$) of the estimated mechanical frequency ($\Omega_{EST}$), wherein the torque reference value ($T_{REF}$) is determined depending on the determined harmonic frequency component ($\Omega_{H,EST}$) of the estimated mechanical frequency ($\Omega_{EST}$) by determining the torque reference value ($T_{REF}$) from the harmonic compensation component ($\Omega_{H,COM}$).

3. The method according to claim 2, wherein
the harmonic compensation component ($\Omega_{H,COM}$) is determined from the harmonic frequency component ($\Omega_{H,EST}$) of the estimated mechanical frequency ($\Omega_{EST}$) by a transfer function, which depends on at least one time constant ($T_1$, $T_2$).

4. The method according to claim 3, wherein

the transfer function depends on another time constant ($T_3$),
the other time constant ($T_3$) is determined depending on the power reference value ($P_{REF}$).

5. The method according to one of claims 2 to 4, comprising:
determining a mechanical frequency output ($\Omega_{OUT}$) from the harmonic compensation component ($\Omega_{H,COM}$), wherein the torque reference value ($T_{REF}$) is determined from the harmonic compensation component ($\Omega_{H,COM}$) by determining the torque reference value ($T_{REF}$) from the mechanical frequency output ($\Omega_{OUT}$).

6. The method according to claim 5, wherein
the mechanical frequency output ($\Omega_{OUT}$) is determined from the harmonic compensation component ($\Omega_{H,COM}$) by adding the harmonic compensation component ($\Omega_{H,COM}$) to the estimated mechanical frequency ($\Omega_{EST}$), wherein the mechanical frequency output ($\Omega_{OUT}$) corresponds to the sum of the harmonic compensation component ($\Omega_{H,COM}$) and the estimated mechanical frequency ($\Omega_{EST}$).

7. The method according to claim 6, wherein
the torque reference value ($T_{REF}$) is determined from the mechanical frequency output ($\Omega_{OUT}$) by dividing the power reference value ($P_{REF}$) through the mechanical frequency output ($\Omega_{OUT}$), wherein the resulting quotient corresponds to the torque reference value ($T_{REF}$).

8. The method according to one of the proceeding claims, wherein
the harmonic frequency component ($\Omega_{H,EST}$) of the estimated mechanical frequency ($\Omega_{EST}$) is determined from the estimated mechanical frequency ($\Omega_{EST}$) by a band-pass filter.

9. A main controller (40) for operating an inverter (20) for driving a generator (22), the inverter (20) comprising a DC-link (24) having a DC-link capacitor (26) and the inverter (20) being configured for converting a three-phase AC voltage ($U_u$, $U_v$, $U_w$) generated by the generator (22) into a DC-link voltage (Uc) to be applied to the DC-link capacitor (26), the main controller (40) comprising:

a memory for storing one or more estimated and/or determined values; and
a processor communicatively coupled to the memory and being configured to carry out the method according to one of claims 1 to 8.

10. An inverter system, comprising:

an inverter (20) for driving a generator (22), the inverter (20) having a DC-link (24) having a DC-link capacitor (26) and being configured for converting a three-phase AC voltage ($U_u$, $U_v$, $U_w$) generated by the generator (22) into a DC-link voltage (Uc) to be applied to the DC-link capacitor (26); and
a main controller (40) according to claim 9 for operating the inverter (20).

11. A computer program for operating an inverter (20) for driving a generator (22), the computer program comprising computer-readable instructions which, when being executed by a processor of a main controller (40) according to claim 9, carry out the method in accordance with one of claims 1 to 8.

**12.** Computer-readable medium on which a computer program according to claim 11 is stored.

**FIG. 1**

**FIG. 2**

**FIG. 3**

Europäisches
Patentamt
European
Patent Office
Office européen
des brevets

# EUROPEAN SEARCH REPORT

Application Number

EP 24 19 7834

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2018/145621 A1 (ALIPRANTIS DIONYSIOS [US] ET AL) 24 May 2018 (2018-05-24) | 1,9-12 | INV. H02P9/48 |
| Y | * paragraph [0073] - paragraph [0129]; figures 1,2 * | 8 | H02M1/12 H02P21/05 H02P29/50 |
| Y | KAVIL KAMBRATH JISHNU ET AL: "Modeling and Control of Marine Diesel Generator System With Active Protection", IEEE TRANSACTIONS ON TRANSPORTATION ELECTRIFICATION, IEEE, vol. 4, no. 1, 1 March 2018 (2018-03-01), pages 249-271, XP011678299, DOI: 10.1109/TTE.2017.2764324 [retrieved on 2018-02-20] | 8 | |
| A | * the whole document * | 1-7,9-12 | |
| Y | JP 5 571365 B2 (NUOVO PIGNONE SPA) 13 August 2014 (2014-08-13) | 8 | |
| A | * paragraph [0017] - paragraph [0018]; figure 2 * | 1-7,9-12 | |
| Y | BLASCO-GIMENEZ R ET AL: "Constant power control of wind turbines during unbalanced faults", INDUSTRIAL ELECTRONICS (ISIE), 2013 IEEE INTERNATIONAL SYMPOSIUM ON, IEEE, 28 May 2013 (2013-05-28), pages 1-6, XP032439508, ISSN: 2163-5137, DOI: 10.1109/ISIE.2013.6563832 ISBN: 978-1-4673-5194-2 | 8 | TECHNICAL FIELDS SEARCHED (IPC) H02P H02M |
| A | * and the text corresponding to fig. 1; figure 1 * | 1-7,9-12 | |

The present search report has been drawn up for all claims

| Place of search | Date of completion of the search | Examiner |
|---|---|---|
| Munich | 6 February 2025 | Kruip, Stephan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 19 7834

This annex lists the patent family members relating to the patent documents cited in the above-mentioned European search report.
The members are as contained in the European Patent Office EDP file on
The European Patent Office is in no way liable for these particulars which are merely given for the purpose of information.

06-02-2025

| Patent document cited in search report | | Publication date | Patent family member(s) | | Publication date |
|---|---|---|---|---|---|
| US 2018145621 | A1 | 24-05-2018 | EP | 3327926 A1 | 30-05-2018 |
| | | | US | 2018145621 A1 | 24-05-2018 |
| JP 5571365 | B2 | 13-08-2014 | CA | 2686368 A1 | 04-06-2010 |
| | | | CN | 101749220 A | 23-06-2010 |
| | | | EP | 2194290 A2 | 09-06-2010 |
| | | | JP | 5571365 B2 | 13-08-2014 |
| | | | JP | 2010136616 A | 17-06-2010 |
| | | | KR | 20100064348 A | 14-06-2010 |
| | | | RU | 2009144730 A | 10-06-2011 |
| | | | US | 2010141193 A1 | 10-06-2010 |

EPO FORM P0459

For more details about this annex : see Official Journal of the European Patent Office, No. 12/82